Europäisches Patentamt

European Patent Office

Office européen des brevets

(19)

(11) **EP 1 261 144 A1**

(12) **EUROPEAN PATENT APPLICATION**

(43) Date of publication:
27.11.2002 Bulletin 2002/48

(51) Int Cl.7: **H04B 1/707**

(21) Application number: **01610054.7**

(22) Date of filing: **25.05.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Telefonaktiebolaget L M Ericsson (Publ)**
**126 25 Stockholm (SE)**

(72) Inventor: **Atarius, Roozbeh**
**Cary, North Carolina 27513 (US)**

(74) Representative: **Boesen, Johnny Peder et al**
**Hofman-Bang Zacco A/S,**
**Hans Bekkevolds Allé 7**
**2900 Hellerup (DK)**

(54) **Method and system for optimising the length of a search window**

(57)    A method of operating a receiver preferably a cellular phone according to the CDMA or W-CDMA standard, comprising the steps of: receiving a sequence of pilot symbols with a timing indicator from a base station; and synchronizing a clock to the timing indicator by correlation of the sequence of pilot symbols with a corresponding, stored sequence of symbols, estimation of a time lag, and adjustment of the timing of the receiver with the lag. The method is characterized in that the calculation of the correlation is limited to be within an interval of time lags, where the interval is set in response to phase or frequency of the clock or a condition affecting the phase or frequency. Thereby the computational effort in setting a timing reference is reduced.

Fig. 3

EP 1 261 144 A1

**Description**

This invention relates to a method of operating a receiver, comprising the steps of: receiving a sequence of pilot symbols with a timing indicator from a base station; and synchronizing a clock to the timing indicator by correlation of the sequence of pilot symbols with a corresponding, stored sequence of symbols, estimation of a time lag, and adjustment of the timing of the receiver with the lag.

Typically, cellular mobile radio communications systems use a slotted paging mode in which signals are processed in predefined time slots. A battery-operated mobile terminal in communication with a base station is thereby assigned to a time slot in which it must be active and process signals to and from the base station. In time slots the mobile terminal is not assigned to, the terminal can go to a sleep mode in order to reduce battery-power consumption. A time slot which a mobile terminal is assigned to is denoted a paging channel.

Slotted paging mode is critical to the life of the battery of the radiotelephone. The goal of slotted mode operation is to reduce the on time of the radio to a minimum and to power down as much of the radio as possible during sleep mode periods. In a wakeup state, the radiotelephone wakes up only during slots preassigned by the radiotelephone system or to process some other condition, such as a user input.

When recovering from a sleep period, the radio must reacquire a radio frequency link with a base station in the radiotelephone system. To reacquire a radio frequency link, a radiotelephone in a CDMA system must be synchronized with system time, which is the timing maintained by base stations and a network controller in the CDMA system. Timing for the mobile station must be maintained with the expectation that, when an assigned slot occurs, the terminal can wake up quickly, make corrections for timing uncertainties and be ready to acquire and process the paging channel.

Synchronization with the base station involves alignment of locally generated pseudorandom noise (PN) sequences with PN sequences transmitted by a base station on a pilot channel. The radiotelephone uses a searcher receiver or other mechanism for aligning the PN sequence with those received from a base station. Once the pilot channel has been acquired, the radiotelephone acquires a synchronization channel and a paging channel. The radiotelephone can then correctly demodulate traffic channels and establish a full duplex communication with the base station.

In addition to shifting from sleep mode to wakeup mode to be active during assigned slots, the radiotelephone may also be required to wake up to process or respond to other events occurring asynchronously in the radio. One example of such an event is a user input, such as a keypress of the keypad of the radiotelephone. Response to such an input should be rapid, with no perceptible delay for the user.

Since the assigned slots appears predictably with time, acquiring the paging channel requires that an accurate time reference be kept at the mobile station during sleep mode. However, maintaining a highly accurate timing reference requires relatively high power dissipation, which is inconsistent with a low power sleep mode.

US patent 6,016,312 discloses a method of maintaining or establishing timing information in a cellular radio communications system comprising base station(s) and mobile terminals. The mobile terminals periodically shift between a sleep mode using a sleep clock generator with a low precision and a wakeup mode using a wakeup clock generator with a high precision. The timing information is maintained or established by determining an offset between the high precision clock and the low precision clock and subsequently correlating a sequence transmitted from the base station to the mobile terminal with a sequence generated in the mobile terminal to obtain timing information.

However, this prior art involves the problem that an excessive amount of time in shifting from a sleep mode to a wakeup mode is used.

This problem is solved when the device mentioned in the opening paragraph is characterized in that the calculation of the correlation is limited to be within an interval of time lags, where the interval is set in response to phase or frequency of the clock or a condition affecting the phase or frequency.

Consequently, the time a receiver can be in a low power or sleep mode can be extended while the computationally effort in calculating the correlation is reduced.

The invention will be explained more fully below in connection with a preferred embodiment and with reference to the drawing, in which:

fig. 1 shows a block diagram of a mobile terminal;

fig. 2 illustrates timing of signals in a mobile terminal and a base station;

fig. 3 shows a block diagram of a data recovering portion of a mobile terminal;

fig. 4 shows a flowchart for shifting between timing references;

fig. 5 shows a detailed flowchart of a method of preparing to change a timing reference in a wakeup mode; and

fig. 6 shows a flowchart of a method of operating a terminal in a wakeup mode.

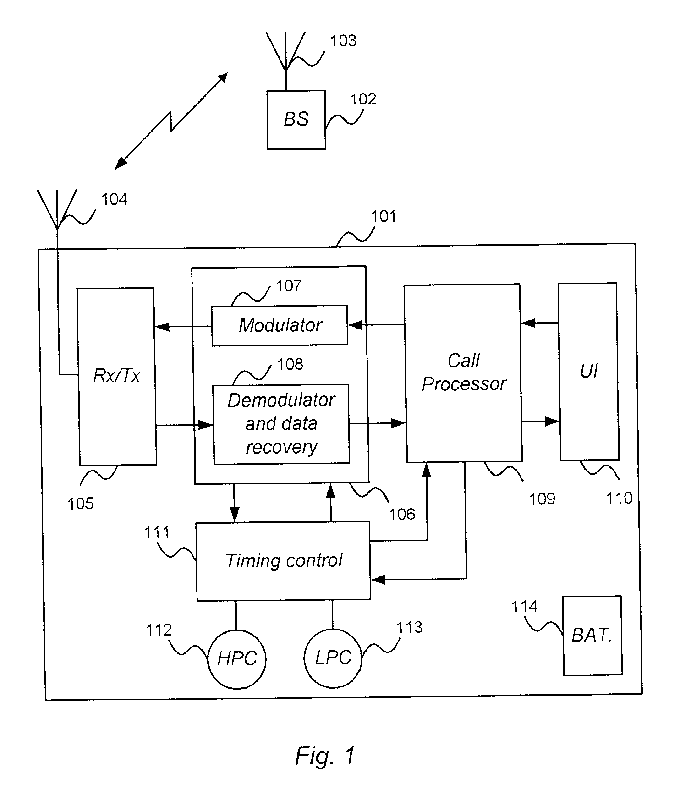

Fig. 1 shows a block diagram of a mobile terminal. The mobile terminal 101 is configured for radio communication with one or more remote base stations 102 in a wireless communications system - for instance in accordance with Code Division Multiple Access (CDMA) or Wideband Code Division Multiple Access (W-CDMA). Both the mobile terminal and the base station comprise an antenna 104, 103, respectively, for transmitting radio communication signals. In the mobile terminal 101 the antenna 104 is coupled to a transmitter/receiver (Tx/Rx) unit 105.

This transmitter/receiver unit is connected to a modem 106 that in a down stream direction comprises a demodulator and data recovery unit 106 for providing data to a call processor 109. Data, to be transmitted from the call processor to the base station 102, is processed in the modem in an upstream direction by means of a modulator 107.

The call processor 109 is configured to control functions of the mobile terminal. This involves processing incoming calls and outgoing calls, controlling the terminal during sleep mode and wakeup mode, and keeping track of system timing.

The user interface is connected to the call processor and arranged to provide the user with means for operating the terminal. The user interface typically comprises a display, a keypad, a microphone and a loudspeaker (not shown).

Timing signals to the modem 106 and the call processor 109 are provided by a timing controller 111. This involves maintaining the timing reference in a sleep mode and a wakeup mode and during transition from sleep mode to wakeup mode and vice versa.

In the wakeup mode the timing reference is set relative to a high precision clock HPC. In the sleep mode the timing reference is set relative to a low precision clock LPC. The high precision clock consumes more power than the low precision clock. The low precision clock is used is periods when high precision timing is not needed. Consequently, the high precision clock can be shut off in these periods to reduce power consumption.

During transition from sleep mode to wakeup mode, the timing controller is arranged to synchronise the timing reference in the terminal with a system timing reference provided by the base station 102. This involves alignment of locally generated pseudorandom noise (PN) sequences with PN sequences transmitted by a base station on a pilot channel.

It should be noted that the mobile terminal is power supplied by a battery 114.

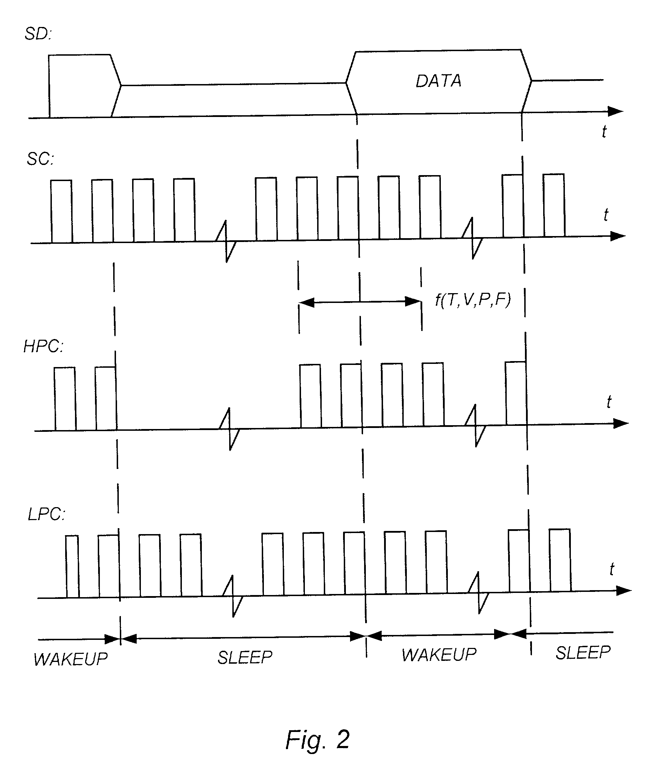

Fig. 2 illustrates timing of signals in a mobile terminal and a base station. The signals comprise a slotted data signal, SD; a system clock signal, SC, in the base station; a high precision clock signal, HPC, in the terminal; and low precision clock signal, LPC, in the terminal. The signals are shown as a function of time t. The time t is divided into slots of a sleep mode and a wakeup mode of the terminal.

In the sleep mode the high precision clock is powered down to reduce power consumption. However, the low precision clock is powered to run both in the sleep mode and the wakeup mode.

Different strategies for maintaining synchronisation between the base station and the terminal exist. According to a preferred strategy, the high precision clock and the low precision clock are phase and frequency synchronised to the system clock in the wakeup mode. Further, a timing reference is set relative to the high precision clock. In a following sleep mode, the terminal can use the same timing reference but now set relative to the low precision clock. In the following wakeup mode, an offset time lag between the low precision clock and the system clock is estimated while the high precision clock is phase and frequency synchronised to the system clock. Consequently, the timing of the terminal can be set by combining timing of the high precision clock and the offset time lag.

According to an alternative strategy for maintaining synchronisation between the base station and the terminal the high precision clock and the low precision clock are frequency synchronised only. This requires that the timing reference is adjusted according to the phase between the low and high precision clock.

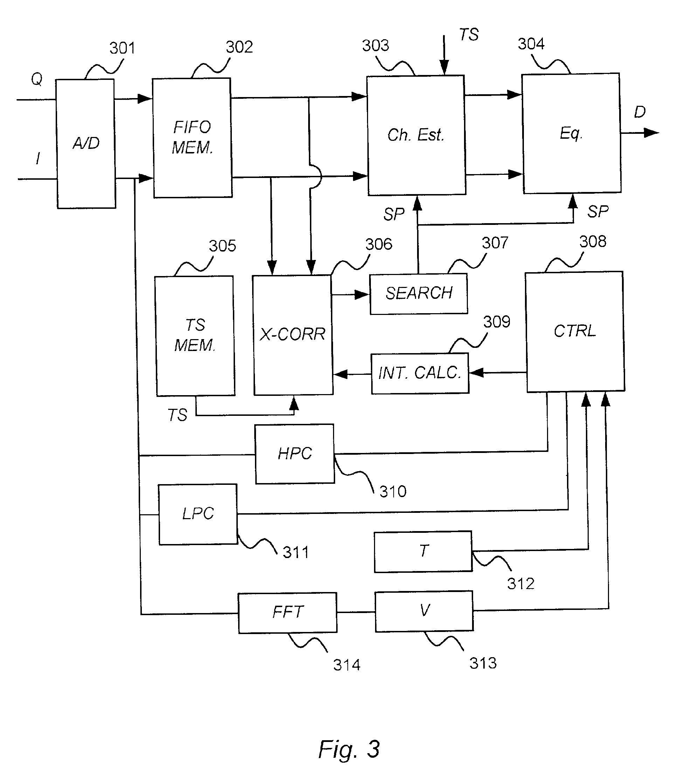

Fig. 3 shows a block diagram of a receiver portion of a mobile terminal. The receiver portion is provided with analogue in-phase (I) and quadrature-phase (Q) signals from a quadrature-phase receiver. By means of an analogue-to-digital (A/D) converter 301, the Q and I signals are sampled four times (X4) per chip, and each sample is converted to a digital value of 1, 4 or 8 bit. The digital values are stored in a first-in-first-out memory 302 as a sequence of data.

The sequence of data is read out from the memory 302 to be supplied to a channel estimator 303 in connection with a timing reference, SP. The timing reference is measured in a number of sample lags.

The channel estimator is configured to estimate the channel based on an expected portion of the sequence of data and a known training sequence TS. For example the above-mentioned local and received pseudo random sequence. The channel is typically modelled as a set of filter coefficients estimated by means of e.g. a least-squares technique. When the channel is modelled, a GSM equalizer or CDMA rake receiver 304 processes the sequence of data to compensate the data for distortions introduced during transmission via the channel. The equalized sequence of data is provided as a stream of data D. This stream of data is in turn supplied to the call processor 109.

The timing reference, SP, is estimated by calculating a cross-correlation of stored sequence of pseudo random symbols with a sequence of received pseudo random symbols by means of processor 306. Subsequently, a search engine is invoked to find the time lag at which maximum correlation occurs.

According to the invention, the calculation of the correlation is limited to be within an interval of time lags, where the interval is set by an interval calculator 309 in response to phase jitter of a low precision clock, LPC, 310; a temperature of the LPC measured by a thermometer, T, 311; and an estimate of the velocity of the mobile terminal. The velocity of the terminal is calculated based on a frequency spectrum of a signal received by the mobile terminal and transmitted by a base station. The frequency spectrum is calculated by means of a Fast Fourier Transform processor 314. The velocity is determined as a frequency shift of the spectrum relative to an expected frequency component. The frequency shift and the velocity is calculated by means of velocity processor, V, 313.

The timing reference SP is used in recovering data received from the base station in the wakeup mode. In the wakeup mode, the timing reference SP is determined to be relative to the high precision clock, HPC, 310. Before switching to sleep mode the low precision clock is phase and frequency synchronised with the high precision clock. Thereby the timing reference SP can be used unchanged during sleep mode.

However, due to the low precision of the low precision clock 311, synchronisation between the terminal and the base station and thereby the system clock may disappear during the sleep mode. Thus, when the terminal is switched into wakeup mode there may be no synchronisation. Therefore the above procedure of estimating the timing reference, SP, by calculating a cross-correlation of stored sequence of pseudo random symbols with a sequence of received pseudo random symbols and finding the time lag at which maximum correlation occurs is invoked again. Meanwhile the low precision clock and the high precision clock are phase and frequency synchronized to the system timing.

The controller 308 is implemented as a portion of the call processor 109.

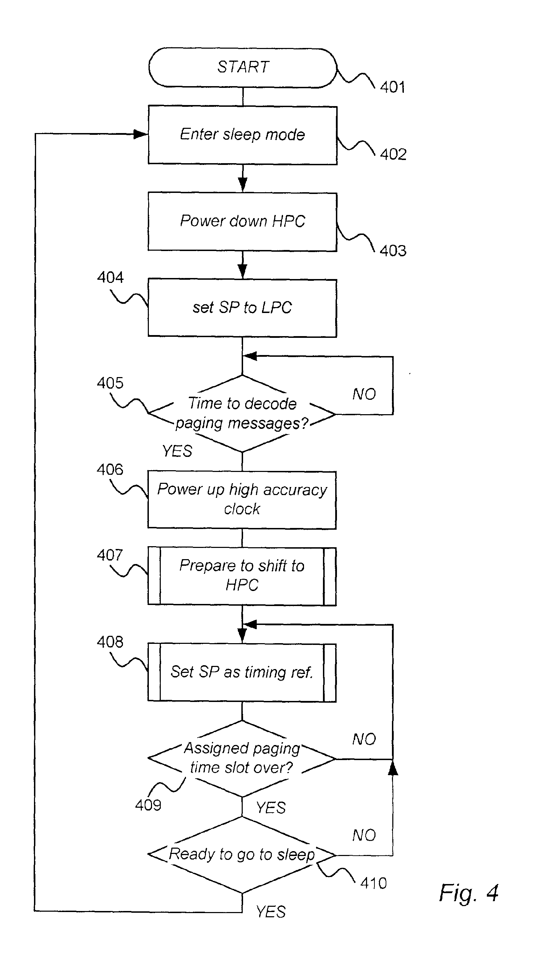

Fig. 4 shows a flowchart for a method of shifting between timing references. The method is started in step 401, wherein the terminal is in a wakeup mode. However, in a following step 402 the terminal enters a sleep mode. This involves powering down the high precision clock, HPC, in step 403 and setting the timing reference SP relative to the low precision clock, LPC. In CDMA systems this is known as quick paging.

In step 405 the terminal is in a sleep mode wherein it is waiting for waking up to go into wakeup mode, that is looking for the time to decode paging messages. The duration of the sleep mode is timed by a timer operating relative to the low precision clock. When it is time to decode the paging messages (YES), the high precision clock is powered up in step 406. In a following sub-procedure 407 the terminal prepares to shift to the high precision clock, HPC. In a following sub-procedure 408 the terminal is in wakeup mode ready to decode paging messages.

In step 409 the terminal periodically examines whether an assigned paging time slot is over. If the time slot is not over (NO) the terminal remains in wakeup mode. However, when the time slot is over (YES) the terminal verifies whether it is ready to go to sleep mode. If it is not ready (NO) the terminal remains in wakeup mode to finish tasks that is still being executed - or alternatively to wait for the tasks to be completed. When the terminal is ready to go to sleep mode (YES) , the method resumes in step 402 for entering the sleep mode.

The method is executed by the controller 308. The steps 403 of powering down the high precision clock typically involve powering down at least a portion of the controller 308 and the call processor 109. Likewise, the step 406 of powering up the high precision clock involves powering up the controller 308 and the call processor 109.

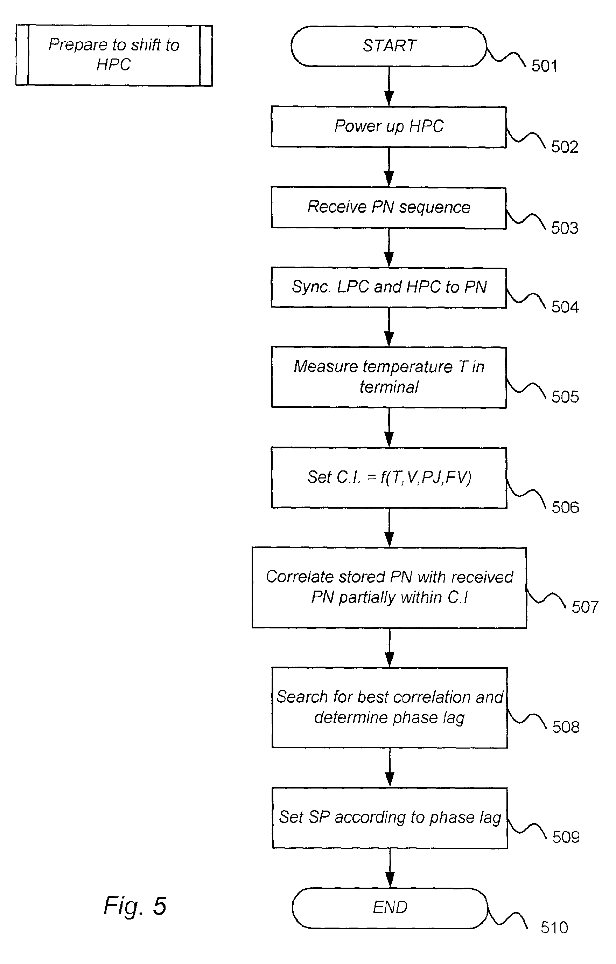

Fig. 5 shows a detailed flowchart of a wakeup mode. When the method has been started in step 501 the high precision clock, HPC, is powered up in step 502. Thereafter a pseudo random, PN, sequence transmitted in a pilot channel is received in step 503. In step 504 the low precision clock, LPC, is synchronised to the high precision clock, HPC. Preferably the synchronisation is achieved by means phase locked loops. In step 505 the temperature T in the terminal is measured. Preferably the temperature is measured as close to the low precision clock as possible.

In step 506 an interval in which a subsequent correlation is to be calculated is determined. This interval is denoted a correlation interval (C.I.). The correlation interval has properties that are determined as a function of conditions affecting the precision of the low precision clock. Such conditions can be the previously measured temperature T, and an estimated velocity, V, at which the terminal is moved. The correlation interval (C.I.) is also determined as a function of phase/frequency fluctuations of the low precision clock, LPC.

The properties of the correlation interval are specified in a number of time lags and include a left limit, a right limit and a width of the interval. Alternatively, the properties of the interval can be specified as a half width of the interval, since it can be assumed that the interval in centred around a zero-lag.

When the properties of the correlation interval have been set, the cross-correlation between a stored PN sequence and a received PN sequence is calculated within a limited interval set by the properties of the correlation interval. This partial cross-correlation is carried out in step 507. By this partial correlation calculation the computationally effort in calculating the correlation is reduced considerably. Consequently, this partly correlation can be calculated faster.

In step 508, the calculated correlation is searched for a time lag at which best correlation between the stored and received PN sequence occurs. In response to this time lag the timing reference SP of the terminal is set in step 509. This in turn allows for proper timing in decoding paging information in the wakeup mode.

Since the computationally effort in calculating the correlation is reduced, the time needed for determining a new timing reference can be shorter. Thereby the time needed for shifting from sleep mode to wakeup mode can be made faster. This allows for extending the duration of the sleep mode such that the battery power consumption can be further reduced.

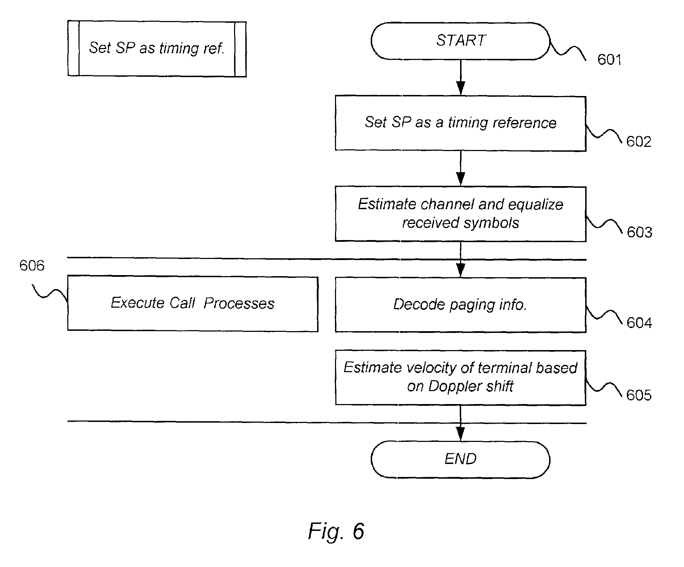

Fig. 6 shows a flowchart of a method of operating a terminal in a wakeup mode. Before continuing from start step 601 a value of SP has been calculated. This value of SP is set as a timing reference relative to the high precision clock in step 602. Based on this timing reference the communication channel is estimated and received data are equalised according to the estimate of the channel in step 603. Subsequently, in step 604 paging information can be decoded and used in conjunction with call processed executed in a concurrently executed step 606.

Before the terminal returns to sleep mode, the velocity, V, at which the terminal is estimated based on the Doppler shift of a frequency component in a signal received from the base station. Alternatively, other known methods of estimating the velocity can be used.

Moreover, since the terminal is using the high precision clock in the wakeup mode and the low precision clock is still running, the phase jitter, PJ, and/or frequency variation, FV, of the low precision clock can be measured.

The values of V, PJ and FV are stored for subsequently calculating the properties of the correlation interval in step 505.

In a formal notation the calculations can be written according to the following:

The stored pseudo random number sequence $PN_s$ and the received pseudo random number sequence $PN_R$ comprises values in a sequence from 1 to N, where N is an integer.

$$PN_S \equiv pn_s\,(1)\mathrm{K}\,pn_s(N)$$

$$PN_R \equiv pn_R\,(1)\mathrm{K}\,pn_R(N)$$

When T, V, PJ and FV denotes temperature, velocity, phase jitter and frequency variation, respectively, the properties PCI of the correlation interval can be written:

$$PCI = f(T,V,PJ,FV)$$

where f denotes a function. In a particular embodiment, the properties PCI comprise a single value corresponding to the width of the correlation interval or the half-width of the correlation interval.

The below formula is used for calculating the cross-correlation $R_{PN}(d)$ :

$$R_{PN}\left(d\right) = \sum_{n=-Q}^{Q} PN_S\left(n\right)PN_R\left(n+d\right)$$

where d indicates a number of time/sample lags, and Q denotes the half-width of the correlation interval. It is assumed that the correlation interval is centred around d=0.

In order to find the best correlation between the two PN sequences a search is performed for maximising the criterion below:

$$x=\max(|R_{PN}|)$$

When a value of x is found, received paging information can be decoded with a timing reference corresponding to-x as stated below:

$$S(p)=S(p\text{-}x)$$

Thereby synchronisation is achieved.

**Claims**

1. A method of operating a receiver, comprising the steps of:

receiving a sequence of pilot symbols with a timing indicator from a base station; and

synchronizing a clock to the timing indicator by correlation of the sequence of pilot symbols with a corresponding, stored sequence of symbols, estimation of a time lag, and adjustment of the timing of the receiver with the lag;

**characterized in that**
the calculation of the correlation is limited to be within an interval of time lags, where the interval is set in response to phase or frequency of the clock or a condition affecting the phase or frequency.

2. A method according to claim 1, **characterized in that** the condition comprises a temperature measured in the receiver.

3. A method according to claim 1, **characterized in that** the condition comprises an estimate of the velocity of the terminal relative to the base station.

4. A method according to claim 3, **characterized in that** the estimate of the velocity is determined based on the Doppler spread of the spectrum of a signal received from the base station.

5. A method according to claim 1, **characterized in that** the interval is set in response to phase jitter of the clock.

6. A method according to claim 1, **characterized in that** the interval moreover is set in response to phase shift of the clock relative a reference clock synchronized to the timing indicator.

7. A method according to claim 1, **characterized in that** the method further comprises the steps of:

determining an offset between the clock and a reference clock synchronized to the timing reference;

entering a low power sleep mode;

timing a sleep duration using the clock;

adjusting timing of the receiver by combining timing of the clock and the offset;

synchronizing the reference clock to the timing indicator; and

exiting the low power sleep mode with the reference clock synchronized with the timing indicator.

8. A method according to claim 1, **characterized in that** the method further comprises the steps of: powering down the reference clock.

Fig. 1

Fig. 2

Fig. 3

START — 401

Enter sleep mode — 402

Power down HPC — 403

404 — set SP to LPC

405 — Time to decode paging messages?   NO

YES

406 — Power up high accuracy clock

407 — Prepare to shift to HPC

408 — Set SP as timing ref.

Assigned paging time slot over?   NO

409   YES

Ready to go to sleep   NO

410

YES

*Fig. 4*

| Prepare to shift to HPC |
| --- |

**START** — 501

**Power up HPC** — 502

**Receive PN sequence** — 503

**Sync. LPC and HPC to PN** — 504

**Measure temperature T in terminal** — 505

**Set C.I. = $f(T,V,PJ,FV)$** — 506

**Correlate stored PN with received PN partially within C.I** — 507

**Search for best correlation and determine phase lag** — 508

**Set SP according to phase lag** — 509

**END** — 510

*Fig. 5*

*Fig. 6*

EP 1 261 144 A1

## EUROPEAN SEARCH REPORT

Application Number

EP 01 61 0054

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int.Cl.7) |
| X | US 6 212 398 B1 (HENRY JR RAYMOND C ET AL) 3 April 2001 (2001-04-03) * the whole document * | 1-8 | H04B1/707 |
| Y | WO 01 35541 A (RAAF BERNHARD ;MICHEL JUERGEN (DE); SIEMENS AG (DE)) 17 May 2001 (2001-05-17) * page 4, line 31 - page 5, line 4 * * page 10, line 35 - page 11, line 10 * | 1-8 | |
| Y | WO 01 20862 A (ERICSSON TELEFON AB L M) 22 March 2001 (2001-03-22) * abstract * * page 1, line 31 - page 2, line 15 * * page 4, line 24 - line 31 * * page 6, line 18 - page 7, line 8; figures 1,2 * | 1-8 | |
| A | US 6 101 173 A (BAYLEY GWAIN) 8 August 2000 (2000-08-08) * abstract * | 1-8 | |
| D,A | US 6 016 312 A (CALLICOTTE MARK J ET AL) 18 January 2000 (2000-01-18) * the whole document * | 1-8 | TECHNICAL FIELDS SEARCHED (Int.Cl.7) H04B |

The present search report has been drawn up for all claims

| Place of search | Date of completion of the search | Examiner |
|---|---|---|
| MUNICH | 25 October 2001 | Bauer, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

13

EP 1 261 144 A1

EP 01 61 0054

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2001

| Patent document cited in search report | | Publication date | Patent family member(s) | | Publication date |
|---|---|---|---|---|---|
| US 6212398 | B1 | 03-04-2001 | AU | 3101200 A | 19-06-2000 |
| | | | EP | 1135944 A1 | 26-09-2001 |
| | | | WO | 0033594 A1 | 08-06-2000 |
| WO 0135541 | A | 17-05-2001 | WO | 0135541 A2 | 17-05-2001 |
| WO 0120862 | A | 22-03-2001 | GB | 2354403 A | 21-03-2001 |
| | | | AU | 7903200 A | 17-04-2001 |
| | | | WO | 0120862 A1 | 22-03-2001 |
| US 6101173 | A | 08-08-2000 | AU | 3008199 A | 11-10-1999 |
| | | | BR | 9908818 A | 12-12-2000 |
| | | | CN | 1293839 T | 02-05-2001 |
| | | | EP | 1064731 A1 | 03-01-2001 |
| | | | WO | 9948221 A1 | 23-09-1999 |
| US 6016312 | A | 18-01-2000 | BR | 9805112 A | 14-12-1999 |
| | | | CN | 1198070 A | 04-11-1998 |
| | | | DE | 19808487 A1 | 03-09-1998 |
| | | | FR | 2760311 A1 | 04-09-1998 |
| | | | GB | 2324681 A ,B | 28-10-1998 |
| | | | HU | 9800230 A2 | 28-10-1998 |
| | | | JP | 10256984 A | 25-09-1998 |
| | | | KR | 263410 B1 | 01-08-2000 |
| | | | PL | 325088 A1 | 31-08-1998 |
| | | | ZA | 9801446 A | 24-08-1998 |

EPO FORM P0459

For more details about this annex : see Official Journal of the European Patent Office, No. 12/82